# EUROPEAN PATENT SPECIFICATION

(11) **EP 0 619 203 B1**
(45) Date of publication and mention of the grant of the patent: **06.08.1997**
(21) Application number: 94302489.3
(22) Date of filing: 08.04.1994
(51) Int. Cl.: B60R 7/06

(54) **Vehicle glovebox assembly**
Montage eines Handschuhkastens eines Kraftfahrzeugs
Montage d'un vide-poches pour véhicule automobile

(30) Priority: 08.04.1993 GB 9307418
(43) Date of publication of application: 12.10.1994
(73) Proprietor: NISSAN EUROPEAN TECHNOLOGY CENTRE LIMITED, Cranfield, Bedfordshire MK43 0DB (GB)
(72) Inventor: Bannister, Lee Alan, Olney, Buckinghamshire, MK43 4DR (GB)
(74) Representative: Waldren, Robin Michael

(56) References cited:
- FR-A- 1 003 385
- US-A- 1 790 977
- US-A- 4 691 960
- US-A- 5 071 162
- PATENT ABSTRACTS OF JAPAN vol. 10, no. 315 (M-529) (2371) 25 October 1986 & JP-A-61 125 947 (NIFCO INC)

## Description

The present invention concerns a vehicle glovebox assembly enabling easy mounting of a glovebox into a vehicle. It also extends to a method of mounting a glovebox in a vehicle using such an assembly.

Gloveboxes are hingeable compartments normally fitted into or under the vehicle dash at a time towards the end of the vehicle assembly process. As a result, the person fitting the glovebox is working in a cramped environment inside the vehicle and also under somewhat poorly lit conditions.

The glovebox is fitted, usually by screw fixing to a bracket arrangement prefixed inside the vehicle. The person has to hold the glovebox in the correct alignment and screw it in place, e.g. using screws and an air-powered tool. The glovebox is a relatively heavy item and continuous work of this kind makes the operator's hand tire. Also, by holding the glovebox steady in correct alignment in one hand and operating the air-tool whilst in the other hand, keeping the screw attached to the end of the tool is difficult. The person does not have a free hand.

These factors and the conditions referred to above lead to inefficiency. The operator can let the glovebox slip out of alignment before the screws are in place and the screws can fall from the end of the tool. It is also difficult to mate the screws with their designated holes whilst the glovebox is in position. As the person's hand tires during the work shift, tendency for these problems to arise increases, thus slowing the work rate.

Published patent specification no. JP-A-61-125947 describes a vehicle glovebox assembly comprising a glovebox body consisting of a container installed on a reinforcing panel A subframe is mounted within a recess of the vehicle by means of respective complementary hooking means provided on the subframe and the dashboard of the vehicle. The glovebox body is attached to the subframe by means of a locking mechanism. However, this arrangement also gives rise to the aforementioned problems during assembly.

A new form of assembly and a method of using same have now been devised which overcome the aforementioned problems.

Thus, a first aspect of the present intention provides a vehicle glovebox assembly comprising a glovebox body, a carrier bracket for supporting the glovebox body and attached to the glovebox body by a hinge member, and at least one mounting member situated within a recess in the vehicle for mounting the glovebox body in the vehicle by means of the carrier bracket, characterised in that the carrier bracket and the at least one mounting member are provided with respective complementary hooking means so that after the glovebox body is attached to the carrier bracket, the carrier bracket can be hooked onto the at least one mounting member.

The assembly, according to the present invention, has a number of distinct advantages:-
(i) there are no awkward angels to be overcome when using the tool to fix the carrier bracket to the glovebox;
(ii) the glovebox body does not need to be held upright during the latter operation;
(iii) the glovebox body is automatically accurately self-aligned in the vehicle before final fixing; and
(iv) the weight of the glovebox body is taken-up by the mounting means during the final fixing operation.

Preferably, the respective hooking means comprise a projection on the at least one mounting member and an opening in the carrier bracket. However, it is also possible to have the alternative configuration whereby a projection is provided on the carrier bracket and an opening is provided in the at least one mounting member.

In most practical realisations, there will be a plurality of mounting members each provided with a projection and the carrier bracket will be provided with a plurality of corresponding openings. The projections and openings may be of any convenient form provided they are capable of co-operating with one another to effect mounting. For example, the projections may be tabs and the openings may be slots. Equally, the projections could be pins and the openings could be substantially circular holes.

It is preferred for the carrier bracket to be provided with means for securing it to the vehicle after the respective hooking means have been engaged. This may be provided for by an adaptation whereby the carrier bracket can be screwed direct to the mounting member(s). This enables the glovebox body to be fixed securely in place so that it does not fall off of its mountings when the vehicle is being driven.

Conveniently, the mounting means comprises a side bracket and a centre bracket.

The present invention extends to the assembly both in kit form and when assembled, including then mounted within a vehicle. It also extends to a method of mounting a glovebox body in a vehicle using any such assembly.

Thus, a second aspect of the present invention provides a method of mounting a glovebox body in a vehicle, comprising the steps of attaching the glovebox body to a carrier bracket by means of a hinge member, providing at least one mounting member within a recess of the vehicle for mounting the glovebox body in the vehicle by means of the carrier bracket, characterised in that the carrier bracket and the at least one mounting member are provided with respective complementary hooking means, and the glovebox body is mounted in the vehicle by first attaching the glovebox body to the carrier bracket and then engaging the respective hooking means to hook to a carrier bracket onto the at least one mounting member.

Preferably, after hooking of the carrier bracket onto the at least one mounting member, the carrier bracket is then secured to a part of the vehicle. e.g. by screw fitting to the mounting member(s).

The present invention will now be explained in more detail by the following description of a non-limiting preferred embodiment and with reference to the accompanying drawings in which:-
Figure 1 shows an exploded view of a dash and dash-mounted components relevant to the present invention;
Figure 2 shows a cross section of the glovebox attached to a carrier bracket;
Figure 3 shows end details of the carrier bracket;
Figure 4A shows a detail of a side bracket and Figure 4B shows a detail of the centre bracket;
Figure 5 shows a detail of how the carrier bracket hooks onto the centre or side bracket in accordance with the present invention;
Figure 6 shows a section along A-A shown in Figure 5;
Figure 7A shows the principal parts of the assembly prior to interconnection and Figure 7B shows a perspective detail of the carrier bracket, centre bracket and glovebox when connected; and
Figures 8A-8C show a method of mounting the glovebox to the vehicle using the assembly according to the present invention.

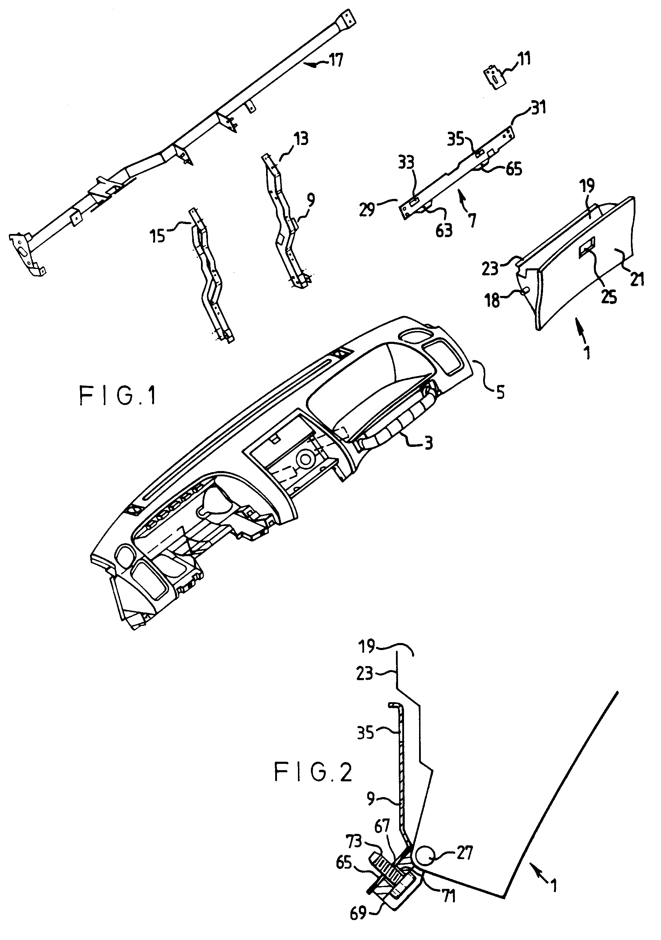

As shown in Figure 1, a glovebox body 1 (hereinafter simply referred to as the "glovebox") is to be fitted into a recess 3 under a moulded dash 5. The glovebox is to be attached to a carrier bracket 7 which itself is to be mounted between a centre bracket 9 and a side bracket 11. The side bracket 11 is fixed to the A pillar of the vehicle body and the centre bracket is fixed to a left hand vertical stay 13 of a pair of vertical stays which also include a right hand stay 15. The stays support a steering member 17. The glovebox is also provided with side stop members 18 etc. to limit the pivotal movement thereof when mounted in the vehicle.

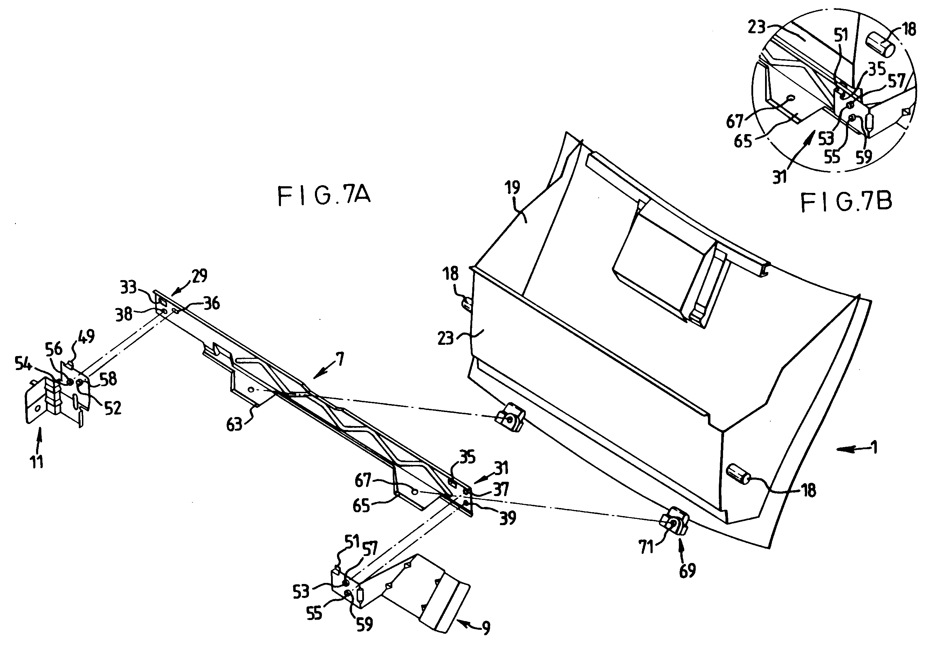

Referring to Figure 1 in combination with Figures 2, 7A and 7B, the glovebox comprises a compartment 19 defined by a front panel 21 and a back part 23. The front panel is provided with a handle 25. The back part 23 is equipped with a hinge 27.

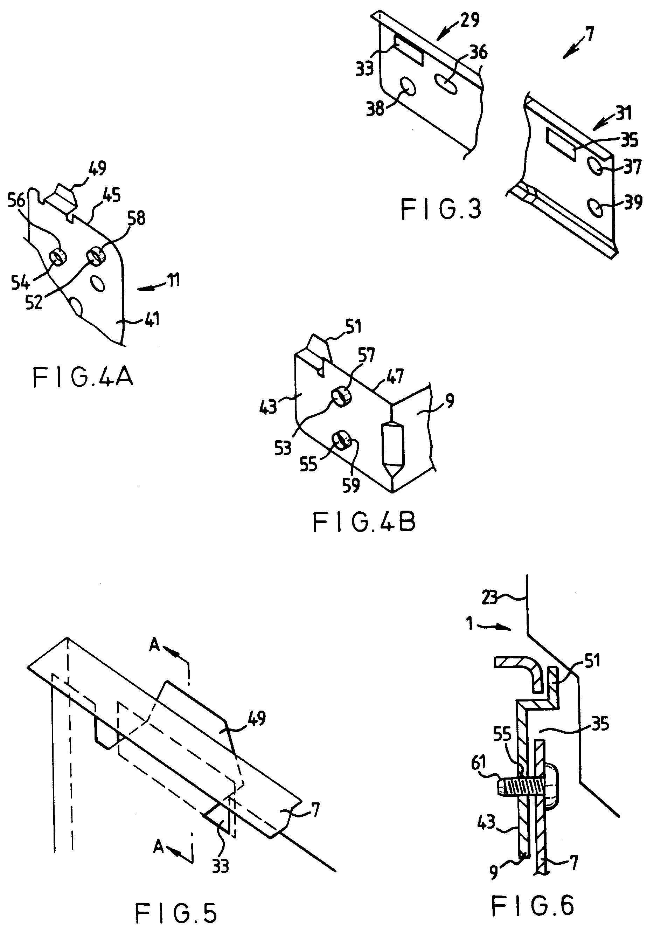

Referring now to Figures 3, 7A and 7B, the carrier bracket 7 is generally elongate and at each of its right 29 and left 31 hand ends (as viewed from the front) is provided with respective laterally extending slots 33, 35. It is also provided with fixing holes 36-39, etc., for enabling it to be secured to the centre and side brackets.

The side bracket 11 and centre bracket 9 (Figures 3, 4A, 4B, 5, 7A and 7B) present respective generally rectangular members 41,43 each having a respective upper edge 45,47 from which extend a respective tab 49,51. These tabs are generally L-shaped in cross section and extend outwardly and upwardly from the upper edges. The tabs extend through the slots 33,35 in the carrier bracket.

The centre and side brackets also have holes 52-55 corresponding to the holes 36-39 for receiving respective fixing screws therefrom. These holes in the centre and side brackets are each provided with respective collars 56-59 for co-operating with the fixing screws. One such fixing screw is denoted by reference numeral 61 in Figure 6.

Referring again to Figures 2, 7A and 7B, the central part of the carrier bracket is provided with downwardly depending flanges 63,65 oblique to the main plane of the carrier bracket 7 and provided with fixing holes 67, etc.. A fixing member 69 downwardly depending from the hinge 27 of the glovebox 1 is also provided with fixing holes 71, etc., enabling the fixing member to be attached to the flanges 63,65 by screws 73, etc., passing through the fixing holes 67,71, etc..

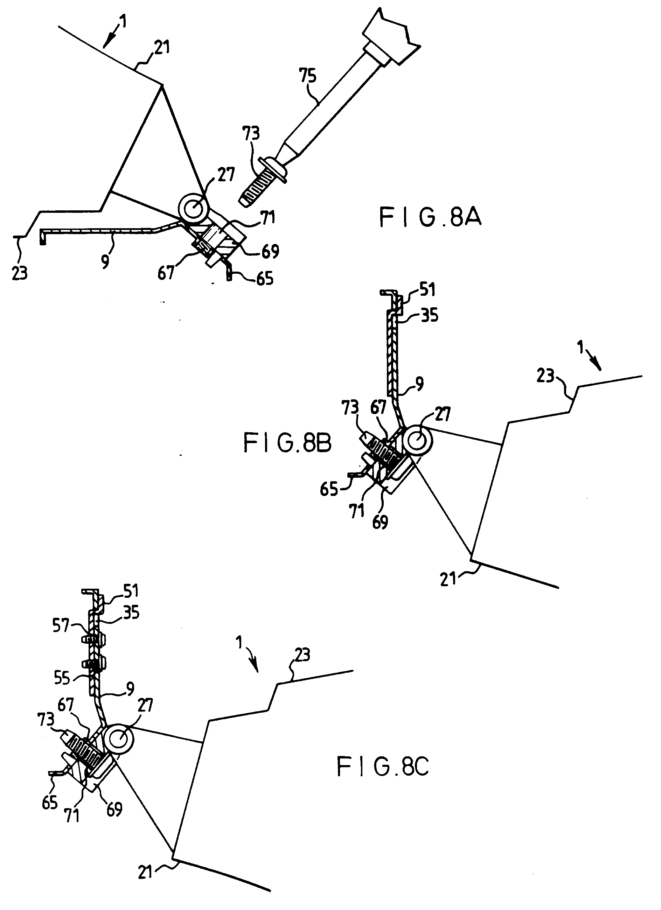

The order of assembly is shown in Figures 8A through 8C.

First, as shown in Figure 8A, the glovebox is attached to the carrier bracket outside of the vehicle. The glovebox can be laid down with the fixing members correctly positioned over the oblique flanges 63,65. The fixing screw 73, etc., attached to an air-powered tool 75 is then driven through the aligned fixing holes 67,71, etc. in the flanges and fixing member.

The centre and side brackets will have already been installed in the vehicle. Now, the glovebox 1 with carrier bracket 7 already attached can be correctly positioned in the vehicle in a hands free manner by hooking of slots 33,35 of the carrier bracket over the respective tabs 49,51 of the centre and side brackets as shown in Figure 8B.

Finally, as shown in Figure 8C the attachment is secured by driving further fixing screws 77,79 through the aligned holes 36-39 and 52-55 in the carrier bracket and centre and side brackets.

In the light of this disclosure, modifications of the described embodiment as well as other embodiments, all within the scope of the present invention as defined by the appended claims will now become apparent to persons skilled in the art.

## Claims

1. A vehicle glovebox assembly, comprising a glovebox body (1), a carrier bracket (7) for supporting the glovebox body (1) and attached to the glovebox body (1) by a hinge member (27), and at least one mounting member (9, 11) situated within a recess (3) in the vehicle for mounting the glovebox body (1) in the vehicle by means of the carrier bracket (7), characterised in that said carrier bracket (7) and said at least one mounting member (9, 11) are provided with respective complementary hooking means (33, 35, 49, 51) so that after the glovebox body (1) is attached to the carrier bracket (7), the carrier bracket (7) can be hooked onto the at least one mounting member (9, 11).

2. An assembly according to claim 1, wherein the respective hooking means comprise a projection (49,51) on the at least one mounting member (9,11) and an opening (33,35) in the carrier bracket (7).

3. An assembly according to claim 2, comprising a plurality of mounting members (9,11), each provided with a projection (49,51) and wherein the carrier bracket (7) is provided with a plurality of openings (33,35).

4. An assembly according to claim 3, wherein the projections are tabs (49,51) and the openings are slots (33,35).

5. An assembly according to claim 3, wherein the projections (49,51) are pins and the openings (33,35) are substantially circular holes.

6. An assembly according to any preceding claim, wherein the carrier bracket (7) is provided with means (36-39) for securing it to the vehicle after the respective hooking means (49,51,33,35) have been engaged.

7. An assembly according to any preceding claim, wherein the mounting means comprises a side bracket (11) and a centre bracket (9).

8. A completed assembly according to any preceding claim.

9. A vehicle comprising a completed assembly according to claim 8.

10. A method of mounting a glovebox body in a vehicle, comprising the steps of attaching the glovebox body (1) to a carrier bracket (7) by means of a hinge member (27), providing at least one mounting member (9, 11) within a recess (3) in the vehicle for mounting the glovebox body (1) in the vehicle by means of the carrier bracket (7), characterised in that said carrier bracket (7) and said at least one mounting member (9, 11) are provided with respective complementary hooking means (33, 35, 49, 51), and the glovebox body (1) is mounted in the vehicle by first attaching the glovebox body (1) to the carrier bracket (7) and then engaging the respective hooking means (33, 35, 49, 51) to hook the carrier bracket (7) onto the at least one mounting member (9, 11).

11. A method according to claim 10 wherein after hooking of the carrier bracket (7) onto the art least one mounting member (9,11), the carrier bracket (7) is then secured to a part of the vehicle.

## Patentansprüche

1. Handschuhkastenbaugruppe für ein Kraftfahrzeug, die aufweist: ein Handschuhkastengehäuse (1), eine Trägerhalterung (7) für das Halten des Handschuhkastengehäuses (1), die am Handschuhkastengehäuse (1) mittels eines Gelenkelementes (27) befestigt ist, und mindestens ein Montageelement (9, 11), das sich innerhalb einer Aussparung (3) im Kraftfahrzeug für das Montieren des Handschuhkastengehäuses (1) in das Kraftfahrzeug mittels der Trägerhalterung (7) befindet, dadurch gekennzeichnet, daß die Trägerhalterung (7) und mindestens ein Montageelement (9, 11) mit den entsprechenden komplementären Hakeneinrichtungen (33, 35, 49, 51) versehen sind, so daß nach dem Befestigen des Handschuhkastengehäuses (1) an der Trägerhalterung (7) die Trägerhalterung (7) in das mindestens eine Montageelement (9, 11) eingehakt werden kann.

2. Baugruppe nach Anspruch 1, bei der die betreffenden Hakeneinrichtungen einen Vorsprung (49, 51) auf dem mindestens einen Montageelement (9, 11) und eine Öffnung (33, 35) in der Trägerhalterung (7) aufweisen.

3. Baugruppe nach Anspruch 2, die eine Vielzahl von Montageelementen (9, 11) aufweist, die jeweils mit einem Vorsprung (49, 51) versehen sind, und wobei die Trägerhalterung (7) mit einer Vielzahl von Öffnungen (33, 35) versehen ist.

4. Baugruppe nach Anspruch 3, bei der die Vorsprünge Nasen (49, 51) und die Öffnungen Schlitze (33, 35) sind.

5. Baugruppe nach Anspruch 3, bei der die Vorsprünge (49, 51) Stifte und die Öffnungen (33, 35) im wesentlichen kreisförmige Löcher sind.

6. Baugruppe nach einem der vorhergehenden Ansprüche, bei der die Trägerhalterung (7) mit einer Einrichtung (36-39) für deren Befestigen am Kraftfahrzeug versehen ist, nachdem die entsprechenden Hakeneinrichtungen (49, 51, 33, 35) in Eingriff gebracht wurden.

7. Baugruppe nach einem der vorhergehenden Ansprüche, bei der die Montageeinrichtung eine Seitenhalterung (11) und eine Mittelhalterung (9) aufweist.

8. Fertiggestellte Baugruppe nach einem der vorhergehenden Ansprüche.

9. Kraftfahrzeug, das eine fertiggestellte Baugruppe nach Anspruch 8 aufweist.

10. Verfahren für das Montieren eines Handschuhkastengehäuses in ein Kraftfahrzeug, das die folgenden Schritte aufweist: Befestigen des Handschuhkastengehäuses (1) an einer Trägerhalterung (7) mittels eines Gelenkelementes (27), Anbringen mindestens eines Montageelementes (9, 11) innerhalb einer Aussparung (3) im Kraftfahrzeug für das Montieren des Handschuhkastengehäuses (1) in das Kraftfahrzeug mittels der Trägerhalterung (7), dadurch gekennzeichnet, daß die Trägerhalterung (7) und mindestens ein Montageelement (9, 11) mit den entsprechenden komplementären Hakeneinrichtungen (33, 35, 49, 51) versehen sind, und daß das Handschuhkastengehäuse (1) in das Kraftfahrzeug montiert wird, indem zuerst das Handschuhkastengehäuse (1) an der Trägerhalterung (7) befestigt wird und danach die entsprechenden Hakeneinrichtungen (33, 35, 49, 51) in Eingriff gebracht werden, um die Trägerhalterung (7) in das mindestens eine Montageelement (9, 11) einzuhaken.

11. Verfahren nach Anspruch 10, bei dem die Trägerhalterung (7) nach dem Einhaken der Trägerhalterung (7) in das mindestens eine Montageelement (9, 11) dann an einem Teil des Kraftfahrzeuges sicher befestigt wird.

## Revendications

1. Dispositif vide-poches pour véhicule, comprenant un corps de vide-poches (1), une console support (7) pour tenir le corps de vide-poches (1) et fixée au corps de vide-poches (1) par un élément d'articulation (27) et au moins un élément de montage (9, 11) situé à l'intérieur d'une cavité (3) dans le véhicule pour monter le corps de vide-poches (1) dans le véhicule au moyen de la console support (7), caractérisé en ce que ladite console support (7) et ledit ou lesdits élément(s) de montage (9, 11) sont pourvus de moyens d'accrochage respectifs complémentaires (33, 35, 49, 51), de manière à ce que, après que le corps de vide-poches (1) est fixé à la console support (7), la console support (7) puisse être accrochée à l'élément ou aux éléments de montage (9, 11).

2. Dispositif selon la revendication 1, dans lequel les moyens d'accrochage respectifs comprennent une saillie (49, 51) sur le ou les élément(s) de montage (9, 11) et une ouverture (33, 35) dans la console support (7).

3. Dispositif selon la revendication 2, comprenant une pluralité d'éléments de montage (9, 11) qui sont pourvus chacun d'une saillie (49, 51), et dans lequel la console support (7) est pourvue d'une pluralité d'ouvertures (33, 35).

4. Dispositif selon la revendication 3, dans lequel les saillies sont des pattes (49, 51) et les ouvertures sont des fentes (33, 35).

5. Dispositif selon la revendication 3, dans lequel les saillies (49, 51) sont des chevilles et les ouvertures (33, 35) sont des trous essentiellement circulaires.

6. Dispositif selon l'une quelconque des revendications précédentes, dans lequel la console support (7) est pourvue de moyens (36-39) pour la fixer au véhicule après que les moyens d'accrochage respectifs (49, 51, 33, 55) ont été engagés.

7. Dispositif selon l'une quelconque des revendications précédentes, dans lequel le moyen de montage comprend une console latérale (11) et une console centrale (9).

8. Dispositif achevé selon l'une quelconque des revendications précédentes.

9. Véhicule comprenant un dispositif achevé selon la revendication 8.

10. Procédé pour monter un corps de vide-poches dans un véhicule, comprenant les étapes qui consistent à fixer le corps de vide-poches (1) à une console support (7) au moyen d'un élément d'articulation (27), à prévoir au moins un élément de montage (9, 11) à l'intérieur d'une cavité (3) dans le véhicule pour monter le corps de vide-poches (1) dans le véhicule au moyen de la console support (7), caractérisée en ce que ladite console support (7) et ledit ou lesdits élément(s) de montage (9, 11) sont pourvus de moyens d'accrochage respectifs complémentaires (33, 35, 49, 51), et en ce que le corps de vide-poches (1) est monté dans le véhicule en fixant d'abord le corps de vide-poches (1) à la console support (7), puis en engageant les moyens d'accrochage respectifs (33, 35, 49, 51) pour accrocher la console support (7) à l'élément ou aux éléments de montage (9, 11).

11. Procédé selon la revendication 10, dans laquelle, après avoir accroché la console support (7) à l'élément ou aux éléments de montage (9, 11), la console support (7) est fixée à une partie du véhicule.
